**Europäisches Patentamt**

**European Patent Office**

**Office européen des brevets**

(19)

(11) Veröffentlichungsnummer : **0 343 397 B1**

(12)

# EUROPÄISCHE PATENTSCHRIFT

(45) Veröffentlichungstag der Patentschrift :
03.06.92 Patentblatt 92/23

(51) Int. Cl.⁵ : **H02K 7/10, H02K 7/116**

(21) Anmeldenummer : **89107732.3**

(22) Anmeldetag : **28.04.89**

(54) **Redundante Antriebsvorrichtung.**

(30) Priorität : **25.05.88 DE 3817651**

(43) Veröffentlichungstag der Anmeldung :
**29.11.89 Patentblatt 89/48**

(45) Bekanntmachung des Hinweises auf die
Patenterteilung :
**03.06.92 Patentblatt 92/23**

(84) Benannte Vertragsstaaten :
**AT BE CH ES FR GB IT LI LU NL SE**

(56) Entgegenhaltungen :
**WO-A-87/02106**
**US-A- 4 179 944**
**US-A- 4 607 180**

(73) Patentinhaber : **ERNO Raumfahrttechnik**
**Gesellschaft mit beschränkter Haftung**
**Hünefeldstrasse 1-5**
**W-2800 Bremen 1 (DE)**

(72) Erfinder : **Felkai, Roland**
**Senator-Theil-Strasse 87**
**W-2800 Bremen 61 (DE)**
Erfinder : **Lenk, Uwe**
**Brüggeweg 28**
**W-2800 Bremen (DE)**
Erfinder : **Petrowitsch, Hilmar**
**Gorch-Fock-Strasse 65**
**W-2803 Weyhe (DE)**

EP 0 343 397 B1

**Beschreibung**

Antriebe für bewegliche Teilsysteme von Raumfahrzeugen, wie beispielsweise für Gelenkausleger, Teleskopausleger, ein- und ausfahrbare Antennen oder Radiatoren, Ver- und Entriegelungsmechanismen, müssen häufig bezüglich ihrer ausfallkritischen Komponenten, wie z.B. Elektromotoren, redundant ausgelegt sein.

Der mögliche Ausfall eines Elektromotors kann unterschiedliche Auswirkungen haben. Er kann antriebslos stehenbleiben bzw. im Antriebsverbund vom Reservemotor mit angetrieben werden, oder er kann infolge einer gequollenen, weil durchgebrannten Motorwicklung, oder infolge eines Lagerschadens blockieren. Diese beiden Ausfallkriterien machen die Anwendung eines Differentialgetriebes als Redundanzmechanismus nicht einfach, weil im Fall, daß ein Motor antriebslos wird, der andere Motor den z.B. auszufahrenden Ausleger nur dann weiter antreiben kann, wenn der ausgefallene Motor mittels einer Bremse blockiert wird. Dies zieht die Implementierung von Sensoren, Magnetbremsen und Schaltern nach sich, die ihrerseits redundant und ansteuerbar sein müssen. Die Einführung zusätzlicher Redundanzen führt einerseits zu nachteiligen Gewichtserhöhungen und kann andererseits die Funktionszuverlässigkeit des Gesamtsystems sogar verschlechtern.

Durch WO-A-8702106 ist eine solche Anordnung bekannt.

Die Aufgabe der Erfindung ist es daher, eine redundante Antriebsvorrichtung vorzustellen, die auf rein mechanischem Wege, d.h. ohne Verwendung von zusätzlichen Sensoren, Schaltern, Magnetbremsen und ähnlichem auskommt, und bei beiden genannten Ausfallarten die Funktionfähigkeit des Antriebssystems sicherstellt.

Die Lösung dieser Aufgabe ergibt sich aus den Merkmalen des Hauptanspruchs, während den Unteransprüchen Weiterbildungen und vorteilhafte Ausgestaltungen zu entnehmen sind.

Der Grundgedanke der Erfindung besteht darin, daß beim Versagen eines von zwei Antriebsmotoren der jeweils intakte Motor in der Lage ist, den Antrieb beispielsweise eines Satellitenauslegers sicherzustellen. Der ausgefallene, aber noch drehfähige Motor wird dabei ohne eigenes Zutun mit angetrieben. Ist bei einem der beiden Motoren infolge eines Lagerschadens oder einer durchgebrannten und gequollenen Wicklung die Antriebswelle blockiert, so sorgt ein mechanisches Kupplungssystem dafür, daß dieser defekte Motor aus dem Antriebsverbund ausgekuppelt wird.

Im folgenden soll die Erfindung anhand eines in der Zeichnung dargestellten Ausführungsbeispiels näher erläutert werden. Es zeigen:

Fig. 1 eine teilweise geschnittene Darstellung der mit zwei Elektromotoren versehenen Antriebsvorrichtung,

Fig. 2 ein Schnittbild von Fig. 1 im Bereich A-A

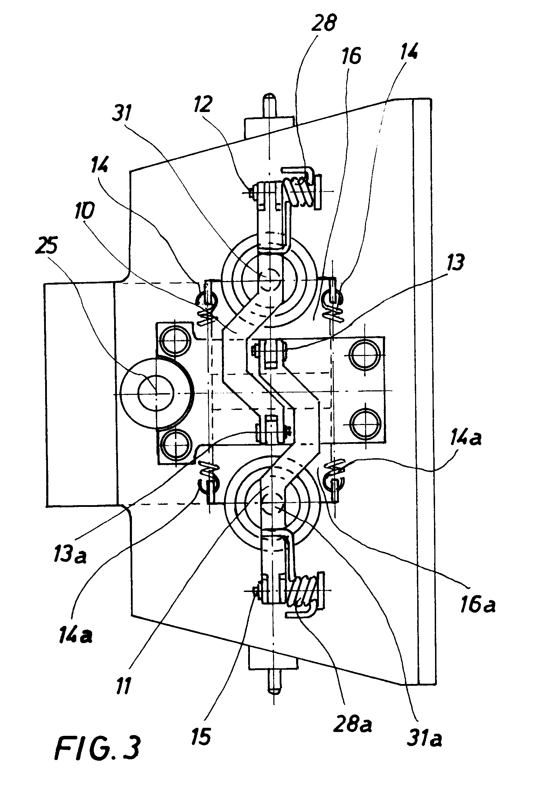

Fig. 3 eine Stirnseitenansicht aus Richtung B gemäß Fig. 1, und

Fig. 4 eine teilweise geschnittene Ansicht im Bereich C-C gemäß Fig.1.

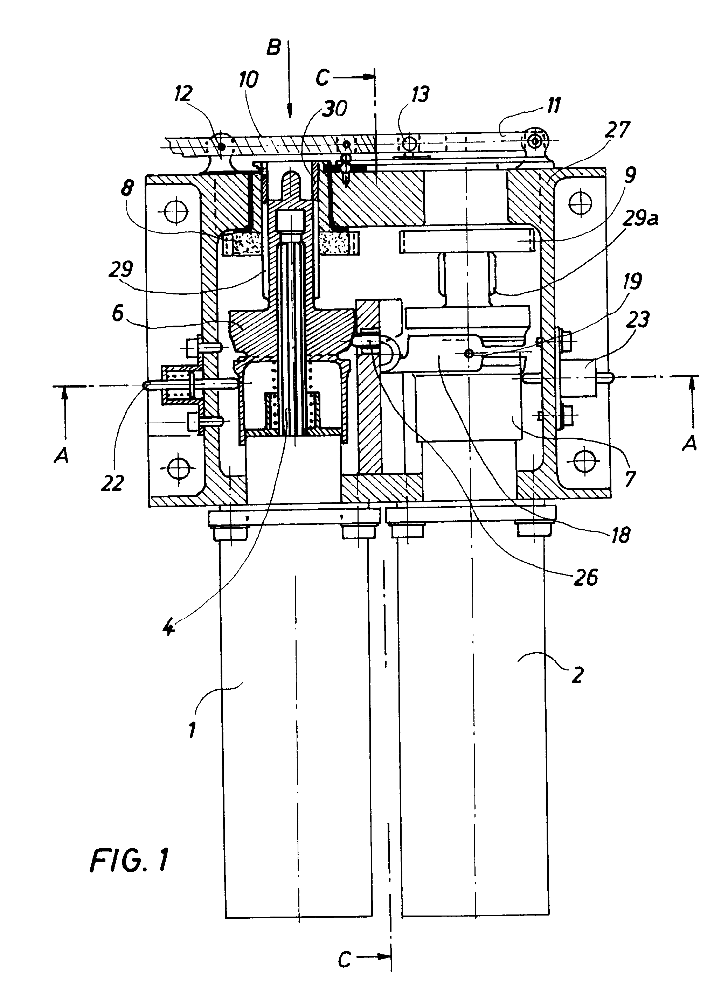

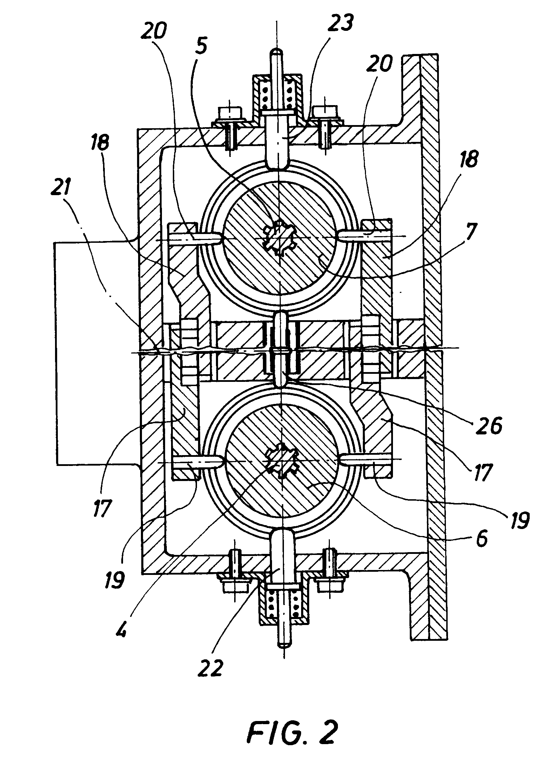

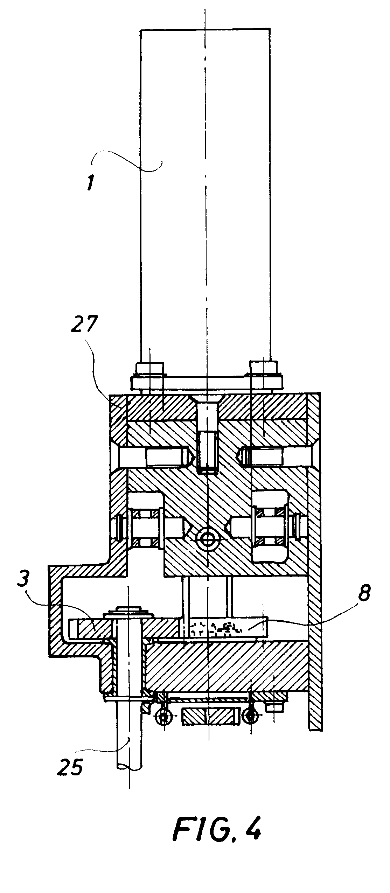

Die erfindungsgemäße Antriebsvorrichtung besteht aus zwei Elektromotoren 1,2, die an einem Getriebe-/Kupplungsteil 27 angeflanscht sind (Fig.1). Beide Motoren 1,2 sind mit je einer Antriebswelle 4,5 verbunden, die jeweils eine Vielkeilverzahnung aufweisen und auf denen je eine Bewegungshülse 6,7 gelagert ist (Fig. 2). Die Bewegungshülsen 6,7 ihrerseits sind in je ein Antriebszahnrad 8,9 eingeschraubt, welche mit einem auf einer Abtriebswelle 25 sitzendem Abtriebszahnrad 3 kämmen und diese antreiben (Fig. 4).

Blockiert der Elektromotor 2, so bleiben für einen kurzen Moment die Zahnräder 3,8,9 stehen. Erst nach dem Überwinden eines definierten mechanischen Widerstandes, z.B. einer Reibungskraft in der Gewindeverbindung (29,29a) zwischen Bewegungshülse und Antriebszahnrad schraubt sich die Bewegungshülse 6 auf der Antriebswelle 4 des funktionsfähigen Motors 1 mit ihrem Außengewinde 29 in das Innengewinde 30 des Antriebszahnrades 8. Dabei wird die Spitze 31 der Bewegungshülse 6 in Richtung auf einen mit einer Feder 28 vorgespannten und um eine Drehachse 12 schwenkbaren Zahnrad- Ver- und Entriegelungshebel 10 bewegt, um diesen schließlich zu öffnen. Hierdurch wird ein am Ende des Hebels 10 angeordneter Stift 13 (Fig. 1) angehoben, der eine mittels Federn 14 vorgespannte Verriegelungsscheibe 16a freigibt, so daß diese sofort zurückschnellt und die Axialarretierung des blockierten Antriebszahnrades 9 freigibt.

Die Bewegungshülse 6 schraubt sich immer weiter in das Zahnrad 8, wobei der Zahnrad- Ver- und Entriegelungshebel 10 noch weiter geöffnet wird. Während des gesamten Einschraubvorganges der Bewegungshülse 6 in das Antriebszahnrad 8 wurde wie aus Fig. 1 und Fig. 2 ersichtlich ist, ein Schwenkhebelpaar 17 eines Doppelhebels 17,18 durch Stifte 19 mitgenommen und schwenkte dabei um eine Drehachse 21.

Grundsätzlich kann jeder dieser beiden Doppelhebel 17,18 einzeln soweit um die gemeinsame Achse 21 geschwenkt werden, ohne den jeweils anderen Doppelhebel im Schwenkvorgang mitzunehmen, bis einer der beiden Zahnrad- Ver- und Entriegelungshebel 10,11 soweit geöffnet wurde, daß, wie bereits beschrieben, die Längsarretierung eines der beiden Antriebszahnräder, in diesem Fall das Antriebszahnrad 9, zusammen mit der Bewegungshülse 7 freigegeben wird.

Erst dann, (der intakte Motor 1 schraubt die Bewegungshülse 6 immer noch weiter in das Antriebszahnrad 8) wird der andere Doppelhebel 18 vom Doppelhebel 17 durch einen Anschlag im Schwenkvorgang mitgenommen und bewirkt über die Stifte 20 ein Herausziehen des Antriebszahnrades 9 zusammen mit der Bewegungshülse 7 aus dem gemeinsamen Antriebsverbund. Dabei gleitet der Zahnkranz des Antriebszahnrades 9 aus dem Zahnkranz des Abtriebszahnrades 3 heraus. Dieser neu entstandene Zustand wird durch einen federbelasteten Stift einer Verriegelungseinheit 23, der in die Ringnut der Bewegungshülse 7 springt, arretiert.Da das Antriebszahnrad 9 des blockierten Motors 2 jetzt aus dem Antriebs verbund gelöst wurde, und der intakte Motor 1 nach wie vor weiter arbeitet, wird die Bewegungshülse 6 nicht noch weiter in das Antriebszahnrad 8 geschraubt, und so betätigt der noch intakte Motor das Abtriebszahnrad 3 wieder. Zudem ist vorgesehen, daß ein Rücklaufsperrstift 26 die Bewegungshülse 6 in einer maximalen Ausfahrposition fixiert.

Die erfindungsgemäße Antriebsvorrichtung ist völlig symmetrisch aufgebaut und zwar dergestalt, daß entweder der eine oder der andere Motor abgekuppelt werden kann. Der Mechanismus löst den blockierenden Motor aus dem Antriebsverbund bei der oben beschriebenen Drehrichtung, also z.B. während des Ausfahrens eines Auslegers.

Blockiert ein Motor in der entgegengesetzten Drehrichtung (z.B. Einfahren eines Auslegers), so muß die Antriebsvorrichtung angehalten werden und eine kurze Zeit in der ursprünglichen Ausfahrrichtung laufen (entsprechend Ausfahren des Auslegers), bis die Abkopplung der defekten Motoreinheit stattgefunden hat. Dann kann die Antriebsvorrichtung durch eine Änderung der Motor-Drehrichtung in der gewünschten Drehrichtung weiterlaufen.

Ausgelegt ist diese Antriebsvorrichtung auch für den Fall, daß zwar keiner der beiden Motoren ausgefallen ist, jedoch seitens der Abtriebsseite eine vorübergehende Überlast auftritt; wenn z.B. der ein- oder auszufahrende Ausleger vorübergehend klemmt. Dazu ist die Antriebsvorrichtung so aufgebaut, daß sich die beiden Teilantriebe nicht gegenseitig aus dem Antriebsverbund herausnehmen können, oder daß das Einschrauben der beiden Bewegungshülsen 6,7 in die Antriebszahnräder 8,9 nicht dazu führt, daß die Schwenkhebelpaare 17,18 zwar verhindern, daß die Zahn- Ver- und Entriegelungseinheiten 10,11 die Zahnräder 8,9 in ihren Längsachsen freigeben, aber bei einer späteren Motorblockade eben diese Schwenkhebelpaare, weil bereits bis zum Anschlag geschwenkt, den ganzen Mechanismus blockieren. Um diese Betriebsstörungen zu vermeiden, ist an der Abtriebswelle 25 eine Rutschkupplung vorgesehen, deren

Grenzdrehmoment deutlich kleiner als das zu übertragende Moment zwischen Bewegungshülse 6,7 und Antriebszahnrad 8,9 ist.

## Patentansprüche

1. Redundante Antriebsvorrichtung, bestehend aus zwei parallel zueinander, an einem Getriebe-/Kupplungsgehäuse (27) angeflanschten Elektromotoren (1,2), welche gemeinsam über eine sich beim Blockieren eines der beiden Motoren selbsttätig aktivierende mechanische Kupplung und ein Getriebe auf eine gemeinsame Abtriebswelle (25) wirken, **gekennzeichnet durch** die folgenden Merkmale:
    a) Kupplung und Getriebe sind für beide Elektromotoren (1,2) symetrisch aufgebaut;
    b) die Elektromotoren (1,2) verfügen über je eine Antriebswelle (4,5) mit Vielkeilverzahnung;
    c) auf den Wellen (4,5) ist jeweils eine Bewegungshülse (6,7) gelagert;
    d) die Bewegungshülsen (6,7) weisen ein Außengewinde (29,29a) auf, mit dem sie in ein Innengewinde (30,30a) von Antriebszahnrädern (8,9) eingeschraubt sind;
    e) die Antriebszahnräder (8,9) kämmen mit einem auf einer Abtriebswelle (25) sitzenden Abtriebszahnrad (3);
    f) die Abtriebswelle (25) ragt auf der den Elektromotoren (1,2) gegenüberliegenden Seite aus dem Getriebe - Kupplungsgehäuse (27);
    g) auf der Abtriebsseite des Gehäuses (27) sind je Antriebsseite ein mit einer Feder (28,28a) belasteter und um eine Achse (12,15) schwenkbarer Zahnrad- Ver- und Entriegelungshebel (10,11) angeordnet;
    h) die Zahnrad- Ver- und Entriegelungshebel (10,11) sind durch Spitzen (31,31a) der Bewegungshülsen (6,7) auslenkbar, wobei sich nach Überwinden eines definierten mechanischen Widerstandes, wie z.B. eine Reibungskraft, die Spitze derjenigen Bewegungshülse durch ein zugeordnetes Loch in der abtriebsseitigen Gehäusewand schiebt, deren Antriebsseite nicht blockiert;
    i) die Ver- und Entriegelungshebel (10,11) verfügen an ihren Enden jeweils über einen Stift (13,13a), mit dem im nicht ausgeschwenkten Zustand je eine mittels Federn (14,14a) vorgespannte Verriegelungsscheibe (16,16a) fixiert wird;
    j) die Verriegelungsscheiben (16,16a) verriegeln die Antriebszahnräder (8,9) gegen eine Bewegung in axialer Richtung;
    k) im Mittelteil der Getriebe- und Kupplungsstufe ist je Antriebsseite ein Doppelhebel (17,18) im Gehäuse (27) gelagert, die mit Stiften (19,20) an den jeweiligen Bewegungshülsen (6,7) angelenkt und über diese mit den Zahnrädern (8,9) verbunden sind;

l) die Doppelhebel (17,18) sind in einem definierten Winkelbereich voneinander unabhängig und nach Erreichen eines Anschlages zusammen bewegbar;

m) bei geöffneter Verriegelungsscheibe der blockierenden Antriebsseite wird unter weiterem Einschrauben der Bewegungshülse der aktiven Antriebsseite der Doppelhebel der blockierenden Seite samt Bewegungshülse und darauf sitzendem Zahnrad aus dem Antriebsverbund in Richtung Elektromotor zurückgezogen, bis ein federbelasteter Stift einer Verriegelungseinheit (22,23) die Bewegungshülse in ihrer maximalen Rückzugsposition fixiert.

2. Redundante Antriebsvorrichtung gemäß Anspruch 1, **dadurch gekennzeichnet**, daß ein Rücklaufsperrstift (26) die tief in das Zahnrad des aktiven Teilantriebes eingeschraubte Bewegungshülse in einer maximalen Ausfahrposition fixiert.

3. Redundante Antriebsvorrichtung gemäß den Ansprüchen 1 und 2, **dadurch gekennzeichnet**, daß an der Abtriebswelle (25) eine Rutschkupplung vorgesehen ist, deren Grenzdrehmoment kleiner als das zu übertragende Moment zwischen Bewegungshülse (6,7) und Antriebszahnrad (8,9) ist.

## Claims

1. A redundant driving device, consisting of two electric motors (1, 2) which are flange-mounted parallel to one another on a gear/clutch housing (27) and which act jointly by way of a mechanical clutch, which automatically activates itself upon the blocking of one of the two motors, and a gear on a common drive shaft (25), characterised by the following features:

a) the clutch and the gear are symmetrically constructed for both electric motors (1, 2);

b) the electrical motors (1, 2) each have a driving shaft (4, 5) having a multi-spline toothing;

c) in each case a motive sleeve (6, 7) is mounted on the shafts (4, 5),

d) the motive sleeves (6, 7) have an external thread (29, 29a) with which they are screwed into an internal thread (30, 30a) of toothed driving wheels (8, 9);

e) the toothed driving wheels (8, 9) mesh with a driven toothed wheel (3) seated on a drive shaft (25);

f) the drive shaft (25) projects on the side opposite to the electric motors (1, 2) out of the gear/clutch housing (27).

g) arranged on the power-take-off side of the housing (27), per driving side, is a toothed-wheel locking and unlocking lever (10, 11) which is loaded with a spring (28, 28a) and which is pivotable about a spindle (12, 15);

h) the toothed-wheel locking and unlocking levers (10, 11) are deflectable by tips (31, 31a) of the motive sleeves (6, 7), in which respect after overcoming a specific mechanical resistance, such as e.g. a frictional force, the tip of that motive sleeve which the driving side does not block pushes through an associated hole in the power-take-off-sided housing wall;

i) the locking and unlocking levers (10, 11) have at their ends in each case a pin (13, 13a), with a respective locking disc (16, 16a) which, in the nonswung-out state, is biassed by means of springs (14, 14a) to lock in position;

j) the locking discs (16, 16a) lock the toothed driving wheels (8, 9) against a movement in the axial direction;

k) in the central part of the gear and clutch stage, per driving side, is a double lever (17, 18) mounted in the housing (27), which levers are hinged by pins (19, 20) to the respective motive sleeves (6, 7) and are connected by way of these to the toothed wheels (8, 9);

l) the double levers (17, 18) are movable in a specific angular range independently of one another and, after reaching a stop, are movable together.

m) with the locking disc of the blocked driving side opened, along with further screwing-in of the motive sleeve of the active driving side the double lever of the blocking side is drawn back together with the motive sleeve and the toothed wheel seated thereon out of the driving connection in the direction of the electric motor, until a spring-loaded pin of a locking unit (22, 23) fixes the motive sleeve in its maximum withdrawal position.

2. A redundant driving device according to claim 1, characterised in that a return-motion blocking pin (26) fixes the motive sleeve, screwed-in deep into the toothed wheel of the active partial drive, in a maximum run-out position.

3. A redundant driving device according to claims 1 and 2, characterised in that provided on the drive shaft (25) is a slipping clutch, the limiting torque of which is less than the moment, that is to be transmitted, between the motion sleeve (6, 7) and the driving toothed wheel (8, 9).

## Revendications

1. Dispositif d'entraînement redondant, composé de deux moteurs électriques (1, 2) qui sont fixés par brides parallèlement l'un à l'autre sur un carter d'engrenages/d'accouplement (27) et agissent ensemble sur un arbre mené commun (25) par l'intermédiaire d'un accouplement mécanique qui entre automatiquement en action en cas de blocage de l'un des deux moteurs et d'un engrenage, caractérisé par les éléments suivants :

a) l'accouplement et l'engrenage sont construits symétriquement pour les deux moteurs électriques (1, 2) ;

b) les moteurs électriques (1, 2) disposent chacun d'un arbre moteur (4, 5) avec des cannelures multiples ;

c) un manchon de déplacement (6, 7) est monté sur chacun des arbre (4, 5) ;

d) les manchons de déplacement (6, 7) présentent un filetage (29, 29a) par lequel ils se vissent dans un taraudage (30, 30a) de roues dentées motrices (8, 9) ;

e) les roues dentées motrices (8, 9) engrènent avec une roue dentée motrice (3) montée sur un arbre mené (25) ;

f) l'arbre mené (25) sort du carter d'engrenages/d'accouplement (27) sur le côté opposé aux moteurs électriques (1, 2) ;

g) un levier de verrouillage et de dévérrouillage de roue dentés (10, 11) sollicité par un ressort (28, 28a) et pouvant pivoter autour d'un axe (12, 15) est disposé sur le côté sortie du carter (27), sur chaque côté d'entraînement ;

h) les leviers de verrouillage et de dévérouillage de roue dentée (10, 11) peuvent être déplacés par des pointes (31, 31a) des manchons de déplacement (6, 7), la pointe du manchon de déplacement dont le côté entraînement ne bloque pas, s'engageant, après avoir vaincu une résistance mécanique définie, comme par exemple une force de frottement, dans un trou associé de la paroi côté sortie de la boîte ;

i) les leviers de verrouillage et de dévérouillage (10, 11) sont munis chacun à leurs extrémités d'un axe (13, 13a) qui, en position non basculée, bloque un disque de verrouillage (16, 16a) mis en précontrainte à l'aide de ressorts (14, 14a) ;

j) les disques de verrouillage (16, 16a) verrouillent les roues dentées motrices (8, 9) pour les empêcher de se déplacer en direction axiale ;

k) un double levier (17, 18) est monté dans le carter (27), sur chaque côté d'entraînement, dans la partie médiane de l'étage d'engrenage et d'accouplement, lesdits leviers étant articulés par des axes (19, 20) sur les manchons de déplacement (6, 7) concernés et étant reliés par l'intermédiaire de ces derniers aux roues dentées (8, 9) ;

l) des doubles leviers (17, 18) sont indépendants l'un de l'autre dans une zone angulaire définie et peuvent être déplacés ensemble après avoir atteint une butée ;

m) lorsque le disque de verrouillage du côté d'entraînement bloqué est ouvert et alors que le manchon de déplacement du côté d'entraînement actif continue d'être vissé, le double levier du côté qui bloque est, avec le manchon de déplacement et la roue dentée fixée dessus, retiré de l'ensemble d'entraînement en direction du moteur électrique jusqu'à ce qu'un doigt sollicité par ressort d'une unité de verrouillage (22, 23) bloque le manchon de déplacement dans sa positioçn de retrait maximale.

2. Dispositif d'entraînement redondant selon la revendication 1, caractérisé en ce qu'un doigt antiretour (26) bloque le manchon de déplacement vissé dans la roue dentée de la partie d'entraînement active dans une position sortie maximale.

3. Dispositif d'entraînement redondant selon les revendications 1 et 2, caractérisé en ce qu'il est prévu sur l'arbre mené (25) un accouplement à friction dont le couple de rotation limite est inférieur au couple à transmettre entre le manchon de déplacement (6, 7) et la roue dentée motrice (8, 9).

FIG. 1

FIG. 2

FIG.3

*FIG. 4*